# EUROPÄISCHE PATENTSCHRIFT

(11) **EP 3 939 241 B1**
(45) Veröffentlichungstag und Bekanntmachung des Hinweises auf die Patenterteilung: **04.12.2024**
(21) Anmeldenummer: 20718153.8
(22) Anmeldetag: 23.03.2020
(51) Int. Cl.: H04L 69/14, H04L 67/12, H04L 51/214, H04L 67/55, H04L 67/562

(54) **ZUGERFASSUNGSSYSTEM SOWIE VERFAHREN ZUM ÜBERMITTELN VON NACHRICHTEN IN EINEM ZUGERFASSUNGSSYSTEM**
TRAIN DETECTION SYSTEM AND METHOD FOR TRANSMITTING MESSAGES IN A TRAIN DETECTION SYSTEM
SYSTÈME DE DÉTECTION DE TRAINS AINSI QUE PROCÉDÉ DE TRANSFERT DE MESSAGES DANS UN SYSTÈME DE DÉTECTION DE TRAINS

(30) Priorität: 15.04.2019 DE 102019205412
(43) Veröffentlichungstag der Anmeldung: 19.01.2022
(73) Patentinhaber: Siemens Mobility GmbH, 81739 München (DE)
(72) Erfinder: BRAVO VERA, Antonio, 38106 Braunschweig (DE); DELMAS, Remy, 10439 Berlin (DE)
(74) Vertreter: Siemens Patent Attorneys
(86) Internationale Anmeldenummer: PCT/EP2020/057930
(87) Internationale Veröffentlichungsnummer: WO 2020/212083

(56) Entgegenhaltungen:
- DE-A1- 102012 212 304
- "Communication networks and systems for power utility automation - Part 90-4: Network engineering guidelines", 6 August 2013 (2013-08-06), pages 1 - 264, XP082031969, Retrieved from the Internet <URL:https://api.iec.ch/harmonized/publications/download/78369> [retrieved on 20130806]
- "IEC TR 61850-90-4 ED2: Communication networks and systems for power utility automation - Part 90-4: Network engineering guidelines", 29 March 2019 (2019-03-29), pages 1 - 341, XP082015258, Retrieved from the Internet <URL:https://www.iec.ch/cgi-bin/restricted/getfile.pl/57_2088e_DTR.pdf?dir=57&format=pdf&type=_DTR&file=2088e.pdf> [retrieved on 20190329]
- DUBE P ET AL: "Harmony: Holistic messaging middleware for event-driven systems", IBM SYSTEMS JOURNAL,, vol. 47, no. 2, 1 April 2008 (2008-04-01), pages 281 - 287, XP001559728, ISSN: 0018-8670, DOI: 10.1147/SJ.472.0281

## Beschreibung

Die Erfindung betrifft ein Zugerfassungssystem mit mindestens einem Achszähler (im Folgenden auch als senderseitige Anwendung bezeichnet), der mit einer Erfassungseinrichtung (im Folgenden als senderseitig Anwendung bezeichnet) signaltechnisch verbunden ist. Außerdem betrifft die Erfindung Verfahren zum Übermitteln von Nachrichten in einem Zugerfassungssystem.

Zugerfassungssysteme, d.h. im Bereich der Bahnautomatisierung eingesetzte Kommunikationsnetze beziehungsweise Steuerungssysteme, müssen im Rahmen ihres Betriebs hohe Anforderungen an die korrekte und zuverlässige Übertragung von Nachrichten, etwa in Form von Steuerungsinformationen, erfüllen. Ursache hierfür ist, dass die entsprechenden Übertragungseigenschaften unmittelbare Auswirkungen auf die signaltechnische Sicherheit, die auch als "Safety" bezeichnet wird, haben beziehungsweise haben können. Entsprechende Zugerfassungssysteme beziehungsweise Bahnautomatisierungssysteme bestehen üblicherweise aus zumindest einer Kontrolleinheit, die eine Vielzahl von Endgeräten steuert oder von diesen Informationen abfragt und hierzu ein entsprechendes Kommunikationsnetz verwendet. Eine Eigenheit von Zugerfassungssystemen ist hierbei, dass sie üblicherweise eine große Anzahl von Geräten beziehungsweise Einheiten umfassen sowie häufig geografisch ausgedehnt sind, so dass sich ein verteiltes System mit Komponenten an unterschiedlichen Orten ergibt.

Bekannte Zugerfassungssysteme weisen häufig den Nachteil vergleichsweise geringer Flexibilität und Skalierbarkeit auf. Dies bedeutet, dass Änderungen oder Erweiterungen des Zugerfassungssystems, etwa durch das Hinzuführen neuer Achszähler, in der Regel nur in einem sehr begrenzten Umfang oder aber verbunden mit erheblichen Aufwänden und Kosten möglich sind.

Das Dokument "IEC TR 61850-90-4 ED2: Communication networks and systems for power utility automation - Part 90-4: Network engineering guidelines", 29. März 2019 (2019-03-29), Seiten 1-341, XP082015258 beschreibt die Multicast-Datenübertragung großer Datenmengen von Merging Units, die Taktung und einen Datentransport über das Netzwerk unter Fehlerbedingungen.

Der vorliegenden Erfindung liegt die Aufgabe zugrunde, ein Zugerfassungssystem für Achszähler anzugeben, das besonders flexibel einsetzbar ist und eine weitgehende Skalierbarkeit erlaubt. Hinsichtlich des Verfahrens liegt der vorliegenden Erfindung die Aufgabe zugrunde, ein besonders flexibel einsetzbares und zugleich eine weitgehende Skalierbarkeit erlaubendes Verfahren zum Übermitteln von Nachrichten von einem oder an einen Achszähler in einem Zugerfassungssystem anzugeben.

Diese Aufgabe wird mit dem eingangs angegebenen Anspruchsgegenstand (Zugerfassungseinrichtung) erfindungsgemäß dadurch gelöst, dass das Zugerfassungssystem zur Datenübertragung ein Publish/Subscribe-System aufweist mit
- zumindest einem zum Veröffentlichen von Nachrichten eingerichteten Achszähler,
- zumindest einem sendeseitigen Nachrichtenbroker,
- mehreren empfangsseitigen Nachrichtenbrokern sowie
- zumindest der einen zum Empfangen von Nachrichten eingerichteten empfangsseitigen Erfassungseinrichtung,
wobei
- jeder Achszähler kommunikationstechnisch an den sendeseitigen Nachrichtenbroker oder einen der sendeseitigen Nachrichtenbroker angebunden ist,
- der zumindest eine sendeseitige Nachrichtenbroker eingerichtet ist, eine von dem Achszähler oder einem der Achszähler veröffentlichte Nachricht anhand eines in der Nachricht angegebenen Themas, das insbesondere auf den Aspekt der Achszählung hinweist, auf zumindest zwei redundante, zumindest teilweise physikalisch unabhängige Netzpfade des Zugerfassungssystems abzubilden,
- das Zugerfassungssystem eingerichtet ist, die Nachricht simultan über die zumindest zwei Netzpfade an mehrere der empfangsseitigen Nachrichtenbroker zu übermitteln,
- jede empfangsseitige Erfassungseinrichtung kommunikationstechnisch an den empfangsseitigen Nachrichtenbroker oder einen der empfangsseitigen Nachrichtenbroker angebunden ist und
- jeder empfangsseitige Nachrichtenbroker eingerichtet ist, die Nachricht an die zumindest eine empfangsseitige Erfassungseinrichtung zu übermitteln.

Das erfindungsgemäße Zugerfassungssystem zeichnet sich somit zunächst dadurch aus, dass es ein Publish/Subscribe-System aufweist. Dabei umfasst das Publish/Subscribe-System zumindest eine zum Veröffentlichen von Nachrichten eingerichteten Achszähler als sendeseitige Anwendung, zumindest einen sendeseitigen Nachrichtenbroker, zumindest einen empfangsseitigen Nachrichtenbroker sowie zumindest eine zum Empfang von Nachrichten eingerichtete Erfassungseinrichtung (empfangsseitige Anwendung).

Entsprechende Publish/Subscribe-Systeme sind als solche aus anderen Anwendungsgebieten bekannt und ermöglichen allgemein die Entkopplung eines Informationsanbieters von einem Informationsempfänger. Dabei werden die Achszähler auch als "Veröffentlicher" oder "Publisher" bezeichnet und Erfassungseinrichtungen als "Subskribenten", "Subscriber" oder "Abonnenten".

Bezogen auf das erfindungsgemäße Zugerfassungssystem hat die Realisierung beziehungsweise Verwendung eines Publish/Subscribe-Systems zur Folge, dass Achszähler und Erfassungseinrichtungen einander nicht kennen müssen. Dies führt insbesondere dazu, dass für den Fall, dass eine weitere Erfassungseinrichtung Nachrichten beziehungsweise Daten von dem Achszähler empfangen möchte, der Achszähler nicht angepasst werden muss, um die Nachrichten zusätzlich auch noch an die weitere Erfassungseinrichtung zu übertragen. Eine Nachricht wird von einer sendeseitigen Anwendung wie dem Achszähler nicht direkt an spezifische Erfassungseinrichtungen adressiert oder gesendet, sondern mittels eines Themas, das auch als "Topic" oder "Subject" bezeichnet werden kann und das insbesondere auf den Aspekt der Achszählung hinweist, in eine Klasse kategorisiert ohne Wissen darüber, ob es für dieses Thema registrierte Erfassungseinrichtungen gibt oder nicht. Basierend auf dem Thema und/oder weiteren in den Nachrichten enthaltenen (Adress-)Informationen, wie beispielsweise einer den Achszähler identifizierenden Kennung oder einem Nachrichtentyp ("Message Type"), als Selektionskriterium, können Erfassungseinrichtungen ihr Interesse an Nachrichten registrieren. Damit kann eine Erfassungseinrichtung Nachrichten empfangen, ohne Kenntnis davon zu haben, ob es überhaupt entsprechende sendeseitigen Anwendungen gibt und falls ja, welche. Die entsprechende Entkopplung zwischen den sendeseitigen Anwendungen und den Erfassungseinrichtungen erfolgt hierbei mittels der entsprechenden Nachrichtenbroker, d.h. des zumindest einen sendeseitigen sowie des zumindest einen empfangsseitigen Nachrichtenbrokers, die auch als Vermittlungseinrichtung, Nachrichtenverteiler oder Brokereinrichtungen bezeichnet werden können.

An dieser Stelle sei angemerkt, dass ein Achszähler häufig auch gleichzeitig eine Erfassungseinrichtung sein wird, d.h. einerseits als "Publisher" von Nachrichten beziehungsweise Informationen und andererseits als "Subscriber" auftreten wird. Ebenso kann auch ein jeweiliger Nachrichtenbroker gleichzeitig sowohl als sendeseitiger als auch als empfangsseitiger Nachrichtenbroker dienen, in welchem Fall an den entsprechenden Nachrichtenbroker sowohl sendeseitige als auch Erfassungseinrichtungen kommunikationstechnisch angebunden sind.

Es sei weiterhin darauf hingewiesen, dass es sich bei den genannten Komponenten des Publish/Subscribe-Systems um eine funktionale Architektur handelt, die hardware- und softwaretechnisch auf unterschiedliche Art und Weise realisiert werden kann. So ist es beispielsweise einerseits denkbar, dass jede der genannten Komponenten mittels einer eigenen, separaten Hardwareeinrichtung, etwa in Form eines entsprechenden Rechners, realisiert wird. Andererseits besteht jedoch auch die Möglichkeit, dass zumindest ein Teil der genannten Komponenten gemeinsam eine entsprechende Hardwareeinrichtung nutzt. Dies kann beispielsweise für eine oder mehrere Achszähler und den oder die empfangsseitigen Nachrichtenbroker sowie in entsprechender Weise auch für den oder die empfangsseitigen Nachrichtenbroker und die zumindest eine Erfassungseinrichtung gelten.

Bei dem erfindungsgemäßen Zugerfassungssystem ist jeder Achszähler kommunikationstechnisch an den sendeseitigen Nachrichtenbroker oder einen der sendeseitigen Nachrichtenbroker angebunden. Dies bedeutet, dass der sendeseitigen Anwendung oder den sendeseitigen Anwendungen jeweils genau ein sendeseitiger Nachrichtenbroker zugeordnet ist. Somit erfolgt die Übermittlung von Nachrichten für der jeweilige Achszähler unter Zwischenschaltung dieses betreffenden sendeseitigen Nachrichtenbrokers. Dabei ist die Anbindung der jeweiligen sendeseitigen Anwendung an den jeweiligen sendeseitigen Nachrichtenbroker nicht notwendigerweise statisch oder permanent, sondern kann beispielsweise auch ausschließlich bei Bedarf, etwa vorbereitend zur Übermittlung einer Nachricht, erfolgen. Gleiches gilt analog in Bezug auf die jeweilige Erfassungseinrichtung sowie den jeweiligen empfangsseitigen Nachrichtenbroker.

Erfindungsgemäß ist der zumindest eine sendeseitige Nachrichtenbroker eingerichtet, eine von der sendeseitigen Anwendung oder einer der sendeseitigen Anwendungen veröffentlichte Nachricht anhand eines in der Nachricht angegebenen Themas auf zumindest zwei redundante, zumindest teilweise physikalisch unabhängige Netzpfade des Zugerfassungssystems abzubilden. Dabei ist die Formulierung "redundante, zumindest teilweise physikalisch unabhängige Netzpfade" so zu verstehen, dass die zumindest zwei Netzpfade zumindest auf einer Teilstrecke des jeweiligen Netzpfades unterschiedliche Netzinfrastruktur verwenden, so dass ein Ausfall oder eine Störung in der betreffenden Netzinfrastruktur des einen Netzpfades keine Auswirkungen auf die betreffende Netzinfrastruktur des anderen Netzpfades hat. Im Sinne einer möglichst weitgehenden Unabhängigkeit der zumindest zwei Netzpfade sind diese vorzugsweise möglichst weitgehend oder sogar vollständig physikalisch voneinander unabhängig. Dabei können die Netzpfade innerhalb eines zusammenhängenden Kommunikationsnetzes bestehen oder aber mittels mehrerer physisch beziehungsweise physikalisch getrennter "redundanter" Kommunikationsnetze gebildet werden.

Gemäß der Erfindung ist außerdem vorgesehen, dass das Zugerfassungssystem eingerichtet ist, die Nachricht simultan an mehrere empfangsseitige Nachrichtenbroker zu übermitteln, die jeweils zumindest zwei Multicast-Gruppen zugeordnet sind, wobei jede der Multicast-Gruppen einen der redundanten, zumindest teilweise physikalisch unabhängigen Netzpfade des Zugerfassungssystems verwendet. Dies bedeutet, dass die Nachrichtenübertragung als solche redundant erfolgt. Konkret kann dies beispielsweise derart geschehen, dass zu sendende Nachrichten seitens der jeweiligen sendeseitigen Anwendung und/oder seitens des sendeseitigen Nachrichtenbrokers mit einer zusätzlichen eindeutigen Sequenznummer versehen werden und als Kopien über die zumindest zwei Netzpfade versendet beziehungsweise übermittelt werden. Vorzugsweise ist die Sequenznummer hierbei in Bezug auf das jeweilige Thema der Achszählung und in Bezug auf den jeweiligen Achszähler eindeutig. Da sich hierdurch der eigentliche Inhalt nicht ändert, wird auch eine Kopie der Nachricht beziehungsweise eine um eine entsprechende Sequenznummer oder ähnliche Steuerinformationen ergänzte (Kopie der) Nachricht im Rahmen der vorliegenden Erfindung als "Nachricht" ("Message") bezeichnet.

Sofern es in der nachfolgenden Beschreibung nicht anders angegeben ist, beziehen sich die Begriffe "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem "Prozessor" oder "Mikroprozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Unter einer "Speichereinheit" kann im Zusammenhang mit der Erfindung beispielsweise ein computerlesbarer Speicher in Form eines Arbeitsspeichers (engl. Random-Access Memory, RAM) oder einer Festplatte verstanden werden.

Erfindungsgemäß ist weiterhin jede Erfassungseinrichtung kommunikationstechnisch an den empfangsseitigen Nachrichtenbroker oder einen der empfangsseitigen Nachrichtenbroker angebunden und der empfangsseitige Nachrichtenbroker ist eingerichtet, die Nachricht an die zumindest eine Erfassungseinrichtung zu übermitteln. Dies bedeutet, dass seitens des empfangsseitigen Nachrichtenbrokers die Nachricht an die zumindest eine Erfassungseinrichtung übermittelt wird. Dabei handelt es sich bei der zumindest einen Erfassungseinrichtung um eine solche, die sich zuvor bei dem empfangsseitigen Nachrichtenbroker für einen Empfang von Nachrichten zu dem betreffenden Thema Achszählung registriert hat.

Das erfindungsgemäße Zugerfassungssystem zeichnet sich dadurch aus, dass es durch die Verwendung eines Publish/Subscribe-Systems eine Entkopplung sendeseitiger sowie Erfassungseinrichtungen vornimmt, wodurch die Anwendungen keine Kenntnisse über mögliche Kommunikationspartner benötigen. Hierdurch wird vorteilhafterweise eine höhere Flexibilität dahingehend erzielt, dass auch im laufenden Betrieb des Zugerfassungssystems neue sendeseitige und/oder Erfassungseinrichtungen gestartet beziehungsweise hinzugefügt werden können oder auch bestehende Anwendungen zwischen Plattformen beziehungsweise Rechnern verschoben werden können. Dies ist vorteilhafterweise möglich, ohne dass eine Neukonfiguration des gesamten Zugerfassungssystems verbunden mit einer entsprechenden Informationsverteilung an betroffene Anwendungen erforderlich ist. Hierdurch wird es beispielsweise ermöglicht, sendeseitige und/oder Erfassungseinrichtungen in wenigen, größeren Rechenzentren zu bündeln, um die Betriebskosten zu reduzieren. Dabei können die Anwendungen weiterhin auch über unterschiedliche Rechnerplattformen oder Rechenzentren verteilt werden, um die Ausfallsicherheit zu erhöhen. Gleichzeitig können beispielsweise ergänzende Anwendungen, welche zum Beispiel eine Überwachung beziehungsweise ein "Monitoring" des Zugerfassungssystems durchführen und eine zusätzliche Fehlerdiagnose oder sogar ein vorausschauendes Management zur Fehlervermeidung erlauben, dem Zugerfassungssystem flexibel hinzugefügt werden. Im Vergleich zu bekannten, in ihrer Konfiguration vergleichsweise starren Zugerfassungssystemen ist das erfindungsgemäße Zugerfassungssystem hierbei auch dahingehend besonders vorteilhaft, dass es weitgehend skalierbar ist, so dass Erweiterungen ohne grundlegende Änderungen der Netzarchitektur möglich sind.

Das erfindungsgemäße Zugerfassungssystem bietet weiterhin den Vorteil, dass es eine Übermittlung von Nachrichten über mehrere redundante, zumindest teilweise physikalisch unabhängige Netzpfade ermöglicht. Durch eine entsprechende simultane, d.h. im Wesentlichen gleichzeitige mehrfache Übermittlung der Nachricht beziehungsweise einer Kopie derselben über die mehreren Netzpfade wird hierbei eine deutliche Erhöhung der Robustheit und Zuverlässigkeit des Zugerfassungssystems, insbesondere in Bezug auf mögliche Ausfälle von Teilen des Netzes, erzielt. Dabei ist zu beachten, dass das erfindungsgemäße Zugerfassungssystem unabhängig davon, ob tatsächlich eine Störung vorliegt oder nicht, eine simultane Übertragung der Nachrichten über die zumindest zwei Netzpfade realisiert. Dadurch, dass die vorhandene Netzredundanz in Bezug auf die zwei oder mehr Übertragungspfade generell genutzt wird und nicht erst im Fehlerfall, d.h. wenn eine Übermittlung einer Nachricht beispielsweise aufgrund eines Ausfalls von Teilen des verwendeten Kommunikationsnetzes fehlgeschlagen ist, wird hierbei eine zuverlässige und weitgehend verzögerungsfreie Übertragung von Nachrichten entsprechend den Anforderungen der Bahnautomatisierung gewährleistet.

Es sei darauf hingewiesen, dass das erfindungsgemäße Zugerfassungssystem in der Regel (ausschließlich) infrastrukturseitige Anwendungen beziehungsweise Komponenten umfassen wird. Dies bedeutet, dass es sich bei der Anwendung des Achszählers um eine streckenseitige Komponente handelt. Dabei können insbesondere lokale Steuereinrichtungen der genannten Komponente als sende- und/oder Erfassungseinrichtungen mit entsprechenden stellwerksseitigen Steuer- beziehungsweise Kontrolleinheiten kommunizieren. Darüber hinaus besteht grundsätzlich jedoch auch die Möglichkeit, dass das erfindungsgemäße Zugerfassungssystem zusätzlich auch fahrzeugseitige Komponenten, d.h. sende- und/oder Erfassungseinrichtungen, umfasst. Bei entsprechenden Anwendungen kann es sich beispielsweise um eine fahrzeugseitige Steuereinrichtung eines Zugbeeinflussungssystems sowie mit dieser kommunikationstechnisch verbundene Sensoren handeln.

Gemäß einer besonders bevorzugten Ausführungsform des erfindungsgemäßen Zugerfassungssystems ist dieses eingerichtet, die Nachricht simultan an mehrere empfangsseitige Nachrichtenbroker zu übermitteln, die jeweils zumindest zwei Multicast-Gruppen zugeordnet sind, wobei jede der Multicast-Gruppen einen der redundanten, zumindest teilweise physikalisch unabhängigen Netzpfade des Zugerfassungssystems verwendet. Die Verwendung des Multicast-Verfahrens ist vorteilhaft, da hierdurch Achszähler Nachrichten an mehrere Erfassungseinrichtungen verschicken können, wobei der jeweilige Achszähler ihre Nachricht aber lediglich einmal verschickt. Das Kommunikationsnetz, das hierfür Multicast unterstützen muss, wie dies beispielsweise bei Standard Ethernet (IEEE 802.3) sowie in IP-Netzen mit Unterstützung des "Protocol Independent Multicast Sparse Mode (PIM-SM)" der Fall ist, verteilt diese Nachricht dann selbstständig an alle interessierten Erfassungseinrichtungen, die der jeweiligen Multicast-Gruppe zugeordnet sind. Im Zusammenhang mit dem erfindungsgemäßen Zugerfassungssystem kann hierbei vorteilhafterweise für jedes Thema eine Abbildung auf zumindest zwei Multicast-Gruppen erfolgen, wobei der jeweiligen Multicast-Gruppe jeweils eine Multicast-Adresse zugeordnet ist. Durch die Verwendung von Multicast wird es somit vorteilhafterweise auf besonders einfache und effiziente Art und Weise ermöglicht, eine Nachricht gleichzeitig beziehungsweise simultan an mehrere empfangsseitige Nachrichtenbroker zu übermitteln. Dabei wird auch im Rahmen der Übermittlung mittels Multicast jeweils eine simultane Übermittlung der Nachricht über redundante zumindest teilweise physikalisch unabhängige Netzpfade des Zugerfassungssystems realisiert beziehungsweise gewährleistet. Zumindest für den Fall, dass die Nachricht über jeden der Netzpfade ungestört an den jeweiligen empfangsseitigen Nachrichtenbroker übermittelt wird, empfängt dieser die jeweilige Nachricht (beziehungsweise zumindest inhaltlich identische Kopien der Nachricht) mehrfach. Grundsätzlich besteht in dieser Situation nun die Möglichkeit, dass der jeweilige empfangsseitige Nachrichtenbroker jede der empfangenen Nachrichten auch an die jeweilige Erfassungseinrichtung übermittelt beziehungsweise weiterleitet, in welchem Fall diese eine korrekte Behandlung mehrfach empfangener inhaltlich identischer Nachrichten gewährleisten muss.

Gemäß einer weiteren besonders bevorzugten Ausführungsform ist das erfindungsgemäße Zugerfassungssystem derart ausgestaltet, dass der zumindest eine empfangsseitige Nachrichtenbroker eingerichtet ist, aufgrund der redundanten Übermittlung der Nachricht empfangene Duplikate der Nachricht zu verwerfen. Dies ist vorteilhaft, da somit jede Nachricht von der jeweiligen Erfassungseinrichtung lediglich einmal empfangen wird. Dies wird dadurch realisiert, dass aufgrund der redundanten Übermittlung der Nachricht empfangene Duplikate der Nachricht, d.h. mit einer bereits empfangenen Nachricht identische Kopien der Nachricht, von dem jeweiligen empfangsseitigen Nachrichtenbroker verworfen werden. Konkret kann dies beispielsweise dadurch realisiert werden, dass zu sendenden Nachrichten von dem jeweiligen sendeseitigen Nachrichtenbroker mit einer zusätzlichen eindeutigen Sequenznummer versehen werden und die jeweilige Nachricht wie bereits beschrieben über die redundanten Netzpfade simultan übermittelt werden. Werden nunmehr von dem jeweiligen empfangsseitigen Nachrichtenbroker Nachrichten beziehungsweise Nachrichtenkopien über die unterschiedlichen Netzpfade empfangen, was in der Regel der Fall sein sollte, so leitet der empfangsseitige Nachrichtenbroker von diesen Nachrichten beziehungsweise Nachrichtenkopien, welche die gleiche Sequenznummer und gleichen Inhalt aufweisen, ausschließlich die zuerst empfangene Nachricht an die jeweilige Erfassungseinrichtung weiter. Dies bedeutet, dass die redundante Nachrichtenübermittlung dahingehend durch die Nachrichtenbroker erzeugt wird, dass der jeweilige sendeseitige Nachrichtenbroker eingangsseitig Redundanz erzeugt, die dann ausgangsseitig von dem jeweiligen empfangsseitigen Nachrichtenbroker wieder entfernt wird. Folglich ist die durch die Nachrichtenbroker erzeugte beziehungsweise genutzte Netzredundanz für die Anwendungen, d.h. sowohl für die zumindest einen Achszähler als auch für die zumindest eine Erfassungseinrichtung, nicht sichtbar. Damit wird auch diesbezüglich mittels der Nachrichtenbroker bei der Übermittlung der Nachrichten in dem jeweiligen Kommunikationsnetz eine Entkopplung von den Anwendungen erzielt.

Gemäß einer Ausgestaltung der Erfindung zum Zwecke der Handhabung der redundanten Verarbeitung der Daten ist vorgesehen, dass die zumindest eine Erfassungseinrichtung
- derart programmiert ist, dass eine redundante Datenverarbeitung erfolgt, wobei das gleiche Nutzprogramm zumindest zweimal ausgeführt wird, und
- mit einem Vergleichsbaustein, der die Ergebnisse der zumindest zwei Programmausführungen miteinander vergleicht, ausgestattet ist.

Bei dieser Ausgestaltung ist insbesondere ein Mikroprozessorsystem vorgesehen, das derart programmiert ist, dass eine redundante Datenverarbeitung erfolgt. Hierzu wird das gleiche Nutzprogramm zumindest zweimal ausgeführt, und es werden mit einem Vergleichsbaustein die Ergebnisse der zumindest zwei Programmausführungen miteinander verglichen. Der Vergleichsbaustein kann beispielsweise ein Voting durchführen, wodurch die Wahrscheinlichkeit, Fehler bei Datenverarbeitung aufzudecken, vorteilhaft steig. Mit anderen Worten wird die

Funktionszuverlässigkeit vorteilhaft gesteigert.

Gemäß einer Ausgestaltung der Erfindung ist vorgesehen, dass
- die zumindest eine Erfassungseinrichtung derart programmiert ist, dass auf dieser zumindest zwei Emulatoren unterschiedliche Mikroprozessoren softwaremäßig nachbilden,
- jeder der zumindest zwei nachgebildeten Mikroprozessoren das gleiche Nutzprogramm mikroprozessorindividuell ausführt und
- die Ergebnisse der zumindest zwei nachgebildeten Mikroprozessoren mit dem Vergleichsbaustein verglichen werden.

Ein wesentlicher Vorteil dieser Ausgestaltung ist darin zu sehen, dass aufgrund des Einsatzes unterschiedlicher Emulatoren, die unterschiedliche Mikroprozessoren softwaremäßig nachbilden, ein spontanes Fehlverhalten von Hardware zuverlässig erkannt werden kann. Dies ist darauf zurückzuführen, dass eine unterschiedliche Abarbeitung des Nutzprogramms durch die beiden nachgebildeten Mikroprozessoren erfolgt, weil sich die nachgebildeten Mikroprozessoren voneinander unterscheiden, so dass ein Fehlverhalten von Hardware zu unterschiedlichen Zwischenergebnissen bzw. zu unterschiedlichen Ausgangssignalen führen wird. Ein spontanes Fehlverhalten kann somit sehr zuverlässig erkannt werden.

Um Fehler im Hardwarebereich von Speichereinheiten erkennen zu können, wird es als vorteilhaft angesehen, wenn den nachgebildeten Mikroprozessoren jeweils ein Speicherbereich individuell zugeordnet ist.

Die Fehlererkennbarkeit durch Speicherfehler lässt sich besonders zuverlässig und damit vorteilhaft erkennen, wenn die Emulatoren jeweils derart programmiert sind, dass die durch sie nachgebildeten Mikroprozessoren beim Abspeichern und Auslesen von Daten in oder aus dem Speicherbereich jeweils eine Adressstruktur verwenden, die sich von der Adressstruktur zumindest eines der anderen nachgebildeten Mikroprozessoren, vorzugsweise von der Adressstruktur aller anderen nachgebildeten Mikroprozessoren, unterscheidet.

Alternativ oder zusätzlich kann vorgesehen sein, dass auch eine unterschiedliche Datenstruktur beim Speichern verwendet wird; demgemäß wird es als vorteilhaft angesehen, wenn die Emulatoren jeweils derart programmiert sind, dass die durch sie nachgebildeten Mikroprozessoren beim Abspeichern und Auslesen von Daten in oder aus dem Speicherbereich jeweils eine Datenstruktur verwenden, die sich von der Datenstruktur zumindest eines der anderen nachgebildeten Mikroprozessoren, vorzugsweise von der Datenstruktur aller anderen nachgebildeten Mikroprozessoren, unterscheidet.

Gemäß einer weiteren Ausgestaltung der Erfindung ist vorgesehen, dass zumindest ein Teil der Erfassungseinrichtungen in einem eigenen Prozessor oder Prozessorkern abläuft.

Das Mikroprozessorsystem kann beispielsweise durch einen einzelnen Prozessor gebildet sein, der in einem Multitasking-Betrieb zwei Emulationsprogramme quasi gleichzeitig durchführt und dabei zumindest zwei Mikroprozessoren nachbildet. Mit Blick auf eine besonders hohe Sicherheit bei der Fehlererkennung wird es jedoch als vorteilhaft angesehen, wenn das Mikroprozessorsystem zumindest zwei oder mehr Einzelprozessoren und/oder zumindest zwei oder mehr Prozessorkerne aufweist, die parallel und unabhängig voneinander arbeiten.

Mit Blick auf geringe Kosten der Anordnung wird es als vorteilhaft angesehen, wenn das Mikroprozessorsystem einen Multikernprozessor umfasst, der zumindest zwei Prozessorkerne aufweist. Vorzugsweise führt jeder Prozessorkern jeweils einen individuell zugeordneten Emulator aus.

Als besonders vorteilhaft wird es angesehen, wenn die Prozessorkerne, die einen Emulator ausführen, jeweils einen Mikroprozessor nachbilden, der sich von den nachgebildeten Mikroprozessoren eines jeden der anderen Prozessorkerne unterscheidet.

Mit Blick auf eine optimale Arbeitsweise eines Vergleichsbausteins für die Ergebnisse der Emulationen wird es als vorteilhaft angesehen, wenn die zumindest zwei Emulatoren von den jeweils individuell zugeordneten Prozessorkernen parallel ausgeführt werden, jeweils in denselben vorgegebenen Zeitfenstern Eingangsparameter einlesen und jeweils in denselben vorgegebenen Zeitfenstern Ergebnisse an den Vergleichsbaustein ausgeben. Vorzugsweise sind die Emulatoren derart programmiert, dass sie einen regelmäßigen oder zyklischen Vergleich der Ergebnisse der von ihnen nachgebildeten Prozessoren durch den Vergleichsbaustein ermöglichen.

Eine zur Synchronisation der Emulatoren bzw. der durch sie nachgebildeten Mikroprozessoren dienende "Uhr" kann beispielsweise durch den Vergleichsbaustein gebildet werden.

Die Erfindung kann daher angewendet werden auf ein Verfahren zum Betreiben einer Anordnung mit einem Mikroprozessorsystem insbesondere zur Kommunikation mit einem Achszähler, wobei bei dem Verfahren eine redundante Datenverarbeitung erfolgt, indem das gleiche Nutzprogramm zumindest zweimal ausgeführt wird, und die Ergebnisse der zumindest zwei Programmausführungen mit einem Vergleichsbaustein verglichen werden.

Dabei ist vorgesehen, dass mit dem Mikroprozessorsystem zumindest zwei Emulatoren betrieben werden und unterschiedliche Mikroprozessoren softwaremäßig nachgebildet werden, jeder der zumindest zwei nachgebildeten Mikroprozessoren das gleiche Nutzprogramm mikroprozessorindividuell ausführt und die Ergebnisse der zumindest zwei nachgebildeten Mikroprozessoren mit dem Vergleichsbaustein verglichen werden.

Gemäß einer weiteren besonders bevorzugten Weiterbildung des erfindungsgemäßen Zugerfassungssystems sind die Nachrichtenbroker zwecks Austauschs von Verwaltungsdaten mittels vorkonfigurierter Multicast-Gruppen untereinander kommunikationstechnisch verbunden. Dies gilt somit sowohl für den zumindest einen sendeseitigen Nachrichtenbroker als auch für den zumindest einen empfangsseitigen Nachrichtenbroker. Als Verwaltungsdaten werden hierbei solche Daten bezeichnet, die losgelöst von konkreten zwischen Anwendungen zu übertragenden Nachrichten zwischen den Nachrichtenbrokern ausgetauscht werden. Bei entsprechenden Verwaltungsdaten, die auch als Signalisierungsdaten bezeichnet werden können, kann es sich insbesondere um Daten beziehungsweise Informationen zu Publish/Subscribe-Beziehungen handeln. Dies bedeutet, dass die Nachrichtenbroker mittels der vorkonfigurierten Multicast-Gruppen beispielsweise Informationen zu neuregistrierten Erfassungseinrichtungen oder neu hinzugekommenen sendeseitigen Anwendungen und den jeweiligen Themen untereinander austauschen können. Vorzugsweise sind hierbei auch wiederum die vorkonfigurierten Multicast-Gruppen mehreren redundanten, zumindest teilweise physikalisch unabhängigen Netzpfaden des Zugerfassungssystems zugeordnet, so dass auch bezüglich der entsprechenden Kommunikationsverbindungen, die auch als "Discovery Channel" bezeichnet werden können, der Nachrichtenbroker untereinander eine Netzredundanz und damit eine besonders hohe Zuverlässigkeit und Robustheit erzielt wird.

Vorzugsweise kann das erfindungsgemäße Zugerfassungssystem auch derart weitergebildet sein, dass das Zugerfassungssystem eingerichtet ist, ein verbindungsloses Protokoll, insbesondere das User Datagram Protocol, UDP, als Transportprotokoll zur Übermittlung der Nachricht zu verwenden. Dies ist vorteilhaft, da beispielsweise bei UDP im Unterschied zu TCP bei Verlust einer Nachricht beziehungsweise eines Telegramms keine Wiederholung der Übertragung erfolgt und hierdurch Verzögerungen durch einen Rückstau von Nachrichten vermieden werden. Dabei ist zu berücksichtigen, dass im Rahmen der Bahnautomatisierung aufgrund der bestehenden Echtzeitanforderungen veraltete Nachrichten aus Sicht einer Anwendung mit einem Verlust der betreffenden Nachricht gleichzusetzen sind. Weiterhin bietet beispielsweise UDP als Transportprotokoll den Vorteil, dass es eine Übermittlung von Nachrichten mittels Multicast unterstützt. Eine Verwendung eines verbindungslosen Protokolls wie UDP als Transportprotokoll zur Übermittlung von Nachrichten auch im Bereich der Bahnautomatisierung wird durch das erfindungsgemäße Zugerfassungssystem durch die simultane Übermittlung der Nachrichten über die zumindest zwei Netzpfade unterstützt beziehungsweise ermöglicht, da hierdurch eine höhere Übertragungsverlässlichkeit erzielt wird als sie UDP als solches bietet.

Gemäß einer besonders bevorzugten Ausführungsform des erfindungsgemäßen Zugerfassungssystems ist der Achszähler eingerichtet, eine Nachricht zu veröffentlichen, die Selektionskriterien in Form des Themas und einer den Achszähler identifizierenden Kennung jeweils in Form einer innerhalb des Zugerfassungssystems eineindeutigen Identität umfasst. Die Verwendung entsprechender eineindeutiger Identitäten, bei denen es sich beispielsweise um "Universally Unique Identifier" (UUID) oder auch "Globally Unique Identifier" (GUID) handeln kann, bietet den Vorteil, dass in dem verteilten Zugerfassungssystem auch ohne zentrale Koordination eine eindeutige Kennzeichnung sowohl des Themas als auch der den Achszähler identifizierenden Kennung ermöglicht wird. Eine entsprechende (ein)eindeutige Kennzeichnung ist Voraussetzung beziehungsweise Grundlage dafür, dass eine fehlerfreie und zuverlässige Kommunikation mittels des Zugerfassungssystems möglich ist.

Das erfindungsgemäße Zugerfassungssystem kann weiterhin auch derart ausgestaltet sein, dass der Achszähler eingerichtet ist, eine Nachricht zu veröffentlichen, die eine Domänenkennung umfasst, durch die eine Mehrzahl von sendeseitigen Anwendungen als zusammengehörig gekennzeichnet wird. Dabei handelt es sich bei der Domänenkennung um eine Information, welche zusammengehörigen sendeseitigen Anwendungen gemeinsam ist. Beispielsweise kann es sich hierbei um eine Standortinformation handeln, d.h. beispielsweise eine Angabe der Art "Bayern-Süd", oder eine Angabe zu der jeweiligen Organisation (z.B. "Bayerische Oberlandbahn") . Die Kodierung der entsprechenden Information, d.h. der Domänenkennung, kann durch ein eigenes Adressfeld erfolgen oder durch eine entsprechende Strukturierung der Adresse der sendeseitigen Anwendungen. Dabei kann die Kodierung der Domäne binär oder textuell erfolgen. Vorteilhafterweise können seitens der Erfassungseinrichtungen beim Abonnieren von Nachrichten Suchmuster auf die Domänenkennung angewandt werden.

Gemäß einer weiteren besonders bevorzugten Ausgestaltung des erfindungsgemäßen Zugerfassungssystems ist der sendeseitige Nachrichtenbroker eingerichtet, die Nachricht über jeden der zumindest teilweise physikalisch unabhängigen Netzpfade mehrfach zeitversetzt an den empfangsseitigen Nachrichtenbroker oder den zumindest einen der empfangsseitigen Nachrichtenbroker zu übermitteln. In diesem Fall wird somit neben der Netzredundanz durch die Übertragung über die mehreren Netzpfade zusätzlich eine Leitungsredundanz dahingehend realisiert, dass die jeweilige Nachricht über jeden der zumindest teilweise physikalisch unabhängigen Netzpfade mehrfach zeitversetzt übermittelt wird. Dabei wird der jeweilige Zeitversatz in der Regel vergleichsweise klein sein, d.h. beispielsweise in der Größenordnung von Millisekunden liegen. Dem liegt die Erkenntnis zugrunde, dass durch einen entsprechenden mehrfachen zeitversetzten Versand von Nachrichten die Verlustwahrscheinlichkeit bei gestörten Leitungen beziehungsweise gestörten Netzpfaden, d.h. insbesondere bei sporadisch, kurzzeitig auftretenden Störungen, verringert werden kann. Dabei kann eine entsprechende zusätzliche, mehrfach zeitversetzte Übermittlung mit einer konfigurierbaren Verzögerung und Wiederholungsanzahl geschehen. Auch in diesem Fall können vorzugsweise alle gesendeten Nachrichten mit einer zusätzlichen eindeutigen Sequenznummer versehen und als entsprechende Kopien versendet beziehungsweise übertragen werden. Bei Empfang von Nachrichten beziehungsweise Nachrichtenkopien mit gleicher Sequenznummer und gleichem Inhalt leitet der jeweilige empfangsseitige Nachrichtenbroker hierbei vorzugsweise wiederum lediglich die zuerst empfangene Nachricht beziehungsweise Nachrichtenkopie an die jeweilige Erfassungseinrichtung weiter. Hierdurch wird vorteilhafterweise erreicht, dass für die Erfassungseinrichtungen die mehrfache zeitversetzte Übermittlung der Nachrichten nicht sichtbar ist und diese damit seitens der Erfassungseinrichtungen auch nicht zu berücksichtigt werden braucht. Die zuvor beschriebene bevorzugte Ausführungsform des erfindungsgemäßen Zugerfassungssystems ist insbesondere im Falle einer Verwendung eines verbindungslosen Protokolls, wie beispielsweise UDP, vorteilhaft, da bei entsprechenden Protokollen Verluste von Nachrichten zulässig sind. Hingegen würde eine Nachricht bei einem verbindungsbehafteten Protokoll, wie beispielsweise TCP, im Falle ihres Verlustes durch das Protokoll selbst wiederholt werden. Dies bringt jedoch den Nachteil mit sich, dass hierdurch Verzögerungen oder "Staus" auftreten können.

Vorzugsweise kann das erfindungsgemäße Zugerfassungssystem auch derart ausgestaltet sein, dass zumindest ein Achszähler redundant vorhanden ist. Wie bereits erläutert, bietet das erfindungsgemäße Zugerfassungssystem erhebliche Vorteile in Bezug auf Flexibilität und Skalierbarkeit. Im Sinne einer Lastverteilung und/oder einer Erhöhung der Ausfallsicherheit besteht hierbei insbesondere die Möglichkeit beziehungsweise der Vorteil, dass Anwendungen, d.h. Achszähler und/oder Erfassungseinrichtungen, ohne Mehraufwand mehrfach redundant an beliebigen Orten an dem Zugerfassungssystem beziehungsweise Bahnautomatisierungssystem teilnehmen können, ohne dass hierfür eine Kommunikationsumschaltung erforderlich ist. Gemäß einer Ausgestaltung der Erfindung ist vorgesehen, dass mehrere Achszähler über Funkverbindungen, insbesondere über nach dem GSM-Standard arbeitende Funkverbindungen, miteinander vernetzt sind. Eine Vernetzung über Funkverbindungen ist insbesondere bei weit verteilten Sensornetzwerken für Achszähler von besonderem Vorteil, da der nicht beträchtliche Aufwand für eine Verkabelung entfällt. Der GSM-Standard hat sich hierbei als kostengünstige Alternative bewährt. Die vernetzten Sensoren können dann gemeinsam oder einzelnen durch das erfindungsgemäße Zugerfassungssystem ausgewertet werden.

Gemäß einer Ausgestaltung der Erfindung ist vorgesehen, dass mehrere Achszähler über einen optischen Wellenleiter miteinander vernetzt sind. Eine Vernetzung der Achszähler durch einen optischen Wellenleiter hat den großen Vorteil, dass hierdurch ein besonders sicheres Übertragungsverfahren für die Achszähler zur Verfügung steht. Diese können über die optischen Wellenleiter in dem erfindungsgemäßen Zugerfassungssystem kommunizieren, wodurch die Sicherheit gegen Fehlübertragungen vorteilhaft erhöht wird.

Gemäß einer Ausgestaltung der Erfindung ist vorgesehen, dass die Achszähler ein Sensornetzwerk mit einer Ringarchitektur bilden. Die Zusammenfassung der Achszähler in einem Sensornetzwerk mit einer Ringarchitektur hat den Vorteil, dass der Aufwand einer Verkabelung vergleichsweise gering ausfällt. Hierdurch kann bei der Verkabelung sowohl Materialaufwand als auch Montageaufwand eingespart werden.

Gemäß einer Ausgestaltung der Erfindung ist vorgesehen, dass die Energieversorgung mindestens eines Achszählers über den optischen Wellenleiter erfolgt. Die Realisierung einer Energieversorgung durch den optischen Wellenleiter hat den Vorteil, dass eine getrennte Infrastruktur für die Energieversorgung nicht vorgehalten werden muss. Die optischen Wellenleiter übertragen die optischen Signale mit einem Energieinhalt, der ausreicht, damit die Achszähler mit Energie versorgt werden können. Die Energieversorgung und die Signalübertragung teilen sich somit den optischen Wellenleiter, wodurch vorteilhaft Aufwand eingespart wird.

Gemäß einer Ausgestaltung der Erfindung ist vorgesehen, dass die Energieversorgung mindestens eines Achszählers autark, insbesondere über Solarzellen, erfolgt.

Eine Energieversorgung des Achszählers kann vorteilhaft eingespart werden, wenn dieser eine autarke Energieversorgung aufweist. Diese lässt sich vorteilhaft sehr platzsparend und kostengünstig realisieren. Sie kann über Solarzellen erfolgen. Eine andere Möglichkeit ist, die Erschütterungen zu nutzen, die durch eine Zugdurchfahrt im Gleis erzeugt werden. Insbesondere, wenn Achszähler an Streckennetzen nachgerüstet werden müssen, ergibt sich eine besonders kostengünstige Alternative durch eine autarke Energieversorgung. Diese müssen dann nämlich nicht an ein Energienetz angeschlossen werden, sodass eine Installation des Achszählers ausreicht. Insbesondere, wenn eine Signalübertragung, wie bereits erläutert, über eine Funkschnittstelle erfolgt, ist auch eine Verkabelung nicht notwendig, um eine Signalverbindung zwischen dem Achszähler und der Erfassungseinrichtung herzustellen.

Die genannte Aufgabe wird alternativ mit dem eingangs angegebenen Anspruchsgegenstand (Verfahren) erfindungsgemäß auch dadurch gelöst, dass in dem Zugerfassungssystem ein Publish/Subscribe-System eingerichtet wird
- mit zumindest einem zum Veröffentlichen von Nachrichten eingerichteten Achszähler,
- mit zumindest einem sendeseitigen Nachrichtenbroker, wobei jeder Achszähler kommunikationstechnisch an den sendeseitigen Nachrichtenbroker oder einen der sendeseitigen Nachrichtenbroker angebunden ist,
- mit zumindest einer zum Empfangen von Nachrichten eingerichteten empfangsseitigen Erfassungseinrichtung sowie
- mit mehreren empfangsseitigen Nachrichtenbrokern, wobei jede empfangsseitige Erfassungseinrichtung kommunikationstechnisch an mehrere der empfangsseitigen Nachrichtenbroker angebunden ist,
wobei
- eine von dem Achszähler oder einem (z.B. 10) der Achszähler veröffentlichte Nachricht von dem betreffenden sendeseitigen Nachrichtenbroker anhand eines in der Nachricht angegebenen Themas, das insbesondere auf den Aspekt der Achszählung hinweist, auf zumindest zwei redundante, zumindest teilweise physikalisch unabhängige Netzpfade des Zugerfassungssystems abgebildet wird,
- die Nachricht simultan über die zumindest zwei Netzpfade an mehrere der empfangsseitigen Nachrichtenbroker, die jeweils zumindest zwei Multicast-Gruppen zugeordnet sind, wobei jede der Multicast-Gruppen einen der redundanten, zumindest teilweise physikalisch unabhängigen Netzpfade (50, 51) des Zugerfassungssystems (1) verwendet, übermittelt wird, und
- die Nachricht von dem zumindest einen empfangsseitigen Nachrichtenbroker an die zumindest eine Erfassungseinrichtung übermittelt wird.

Die Vorteile des erfindungsgemäßen Verfahrens entsprechen denjenigen des erfindungsgemäßen Zugerfassungssystems, so dass diesbezüglich auf die entsprechenden vorstehenden Ausführungen verwiesen wird. Gleiches gilt hinsichtlich der im Folgenden genannten bevorzugten Weiterbildungen des erfindungsgemäßen Verfahrens in Bezug auf die jeweilige entsprechende bevorzugte Weiterbildung des erfindungsgemäßen Zugerfassungssystems, so dass auch diesbezüglich auf die entsprechenden vorstehenden Erläuterungen verwiesen wird.

Vorzugsweise kann das erfindungsgemäße Verfahren derart weitergebildet sein, dass die Nachricht simultan an mehrere empfangsseitige Nachrichtenbroker übermittelt wird, die jeweils zumindest zwei Multicast-Gruppen zugeordnet sind, wobei für jede der Multicast-Gruppen einer der redundanten, zumindest teilweise physikalisch unabhängigen Netzpfade des Zugerfassungssystems verwendet wird.

Gemäß einer weiteren besonders bevorzugten Ausführungsform des erfindungsgemäßen Verfahrens werden aufgrund der redundanten Übermittlung der Nachricht empfangene Duplikate der Nachricht von dem empfangsseitigen Nachrichtenbroker oder dem zumindest einen der empfangsseitigen Nachrichtenbroker verworfen.

Vorzugsweise kann das erfindungsgemäße Verfahren auch derart ausgestaltet sein, dass durch die Nachrichtenbroker mittels vorkonfigurierter Multicast-Gruppen untereinander Verwaltungsdaten ausgetauscht werden.

Gemäß einer besonders bevorzugten Weiterbildung des erfindungsgemäßen Verfahrens wird ein verbindungsloses Protokoll, insbesondere das User Datagram Protocol, UDP, als Transportprotokoll zur Übermittlung der Nachricht verwendet.

Vorzugsweise kann das erfindungsgemäße Verfahren weiterhin auch derart fortgebildet sein, dass von der sendeseitigen Anwendung eine Nachricht veröffentlicht wird, die Selektionskriterien in Form des Themas und einer den Achszähler identifizierenden Kennung jeweils in Form einer innerhalb des Zugerfassungssystems eineindeutigen Identität umfasst.

Gemäß einer weiteren besonders bevorzugten Weiterbildung des erfindungsgemäßen Verfahrens wird von der sendeseitigen Anwendung eine Nachricht veröffentlicht, die eine Domänenkennung umfasst, durch die eine Mehrzahl von sendeseitigen Anwendungen als zusammengehörig gekennzeichnet wird.

Vorzugsweise kann das erfindungsgemäße Verfahren auch derart ausgestaltet sein, dass die Nachricht von dem sendeseitigen Nachrichtenbroker über jeden der zumindest teilweise physikalisch unabhängigen Netzpfade mehrfach zeitversetzt an den empfangsseitigen Nachrichtenbroker oder den zumindest einen der empfangsseitigen Nachrichtenbroker übermittelt wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- Figur 1: in einer schematischen Skizze ein erstes Ausführungsbeispiel des erfindungsgemäßen Zugerfassungssystems, anhand derer auch das erfindungsgemäße Verfahren beispielhaft erläutert wird,
- Figur 2: in einer schematischen Skizze eine Alternative zum ersten Ausführungsbeispiel mit einer anderen Verkabelung der Achszähler,
- Figur 3: in einer schematischen Skizze ein zweites Ausführungsbeispiel des erfindungsgemäßen Zugerfassungssystems, anhand derer auch das erfindungsgemäße Verfahren beispielhaft erläutert wird,
- Figur 4: ein Ausführungsbeispiel für eine erfindungsgemäße Anordnung als Detail für das erste und zweite Ausführungsbeispiel, anhand derer auch weitere Teilaspekte des erfindungsgemäßen Verfahrens beispielhaft erläutert wird, wobei bei der Anordnung ein zum Einsatz kommendes Mikroprozessorsystem für einen oder beide Nachrichtenbroker 30, 40 zwei separate Prozessoren umfasst.
- Figur 5: ein weiteres Ausführungsbeispiel für eine erfindungsgemäße Anordnung gemäß Figur 4, bei der ein Mikroprozessorsystem durch einen Multikernprozessor gebildet ist, der zwei Prozessorkerne aufweist.

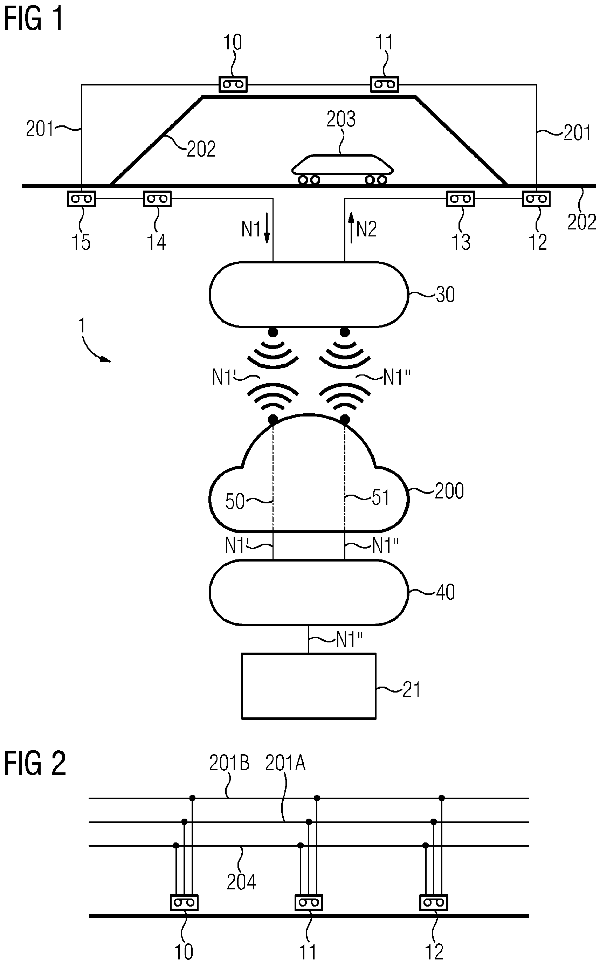

Figur 1 zeigt in einer schematischen Skizze ein erstes Ausführungsbeispiel des erfindungsgemäßen Zugerfassungssystems. Im Detail ist hierbei ein Zugerfassungssystem 1 dargestellt, das Achszähler 10 bis 15 und eine Erfassungseinrichtung 21 umfasst. Die Achszähler 10 bis 15 bilden ein Sensornetzwerk aus, welches durch einen optischen Leiter 201 verbunden ist. Das Netzwerk weist eine Ringarchitektur auf. Das Netzwerk ist an einem Gleis 202 verlegt, so dass die Achszähler 10 bis 15 vorbeifahrende Züge 203 detektieren können.

Dabei sind die Anwendungen (d. h. sendeseiteigen und empfangsseitigen Anwendungen) 10 bis 15 und, 21 Bestandteil eines Publish/Subscribe-Systems des Zugerfassungssystems 1. Hierbei sei angenommen, dass es sich bei den Anwendungen 10 und bis 15 um Achszähler als sendeseitige Anwendungen, d.h. "Publisher", und bei der Anwendung 21 um eine Erfassungseinrichtung als empfangsseitige Anwendung, d.h. einen "Subscriber", des Publish/Subscribe-Systems handelt. Zur Vermeidung von Missverständnissen sei darauf hingewiesen, dass in der Praxis eine Anwendung häufig zugleich "Publisher" und "Subscriber", d.h. zugleich sendeseitige und Erfassungseinrichtung sein wird. Die vorgenommene Unterscheidung zwischen den Achszählern 10 bis 15 und der Erfassungseinrichtung 21 dient damit im Rahmen der Beschreibung der Ausführungsbeispiele primär dazu, die Art und Weise der Übertragung von Nachrichten in dem Zugerfassungssystem 1 in eine Richtung zu erläutern (ohne Beschränkung bezüglich der entgegengesetzten Richtung).

In der schematischen Darstellung der Figur 1 ist weiterhin ein sendeseitiger Nachrichtenbroker 30 sowie ein empfangsseitiger Nachrichtenbroker 40 angedeutet, die vorzugsweise jeweils als Software-Komponenten realisiert sind. Wie durch entsprechende Verbindungslinien angedeutet, sind die sendeseitigen Anwendungen 10 bis 15 hierbei kommunikationstechnisch an den sendeseitigen Nachrichtenbroker 30 und die Erfassungseinrichtung 21 an den empfangsseitigen Nachrichtenbroker 40 angebunden. Die entsprechende kommunikationstechnische Anbindung kann hierbei auf beliebige, für sich bekannte Art und Weise erfolgen, d.h. insbesondere sowohl drahtgebunden als auch drahtlos. Auch hinsichtlich der Nachrichtenbroker 30, 40 sei an dieser Stelle angemerkt, dass an diese in der Praxis jeweils sowohl Achszähler als sendeseitige Anwendungen als auch Erfassungseinrichtungen angebunden sein können, so dass die Nachrichtenbroker 30, 40 in diesem Fall sowohl als sendeseitige als auch als empfangsseitige Nachrichtenbroker fungieren.

Die von den Achszählern 10 bis 15 an den sendeseitigen Nachrichtenbroker 30 übermittelten Nachrichten können grob in zwei Arten unterteilt werden. Einerseits kann es sich hierbei um Signalisierungsnachrichten der sendeseitigen Anwendungen 10 bis 15 handeln, zum Beispiel in Form eines Wunsches etwas zu abonnieren ("Subscribe"). Andererseits kann es sich um Anwendungsnachrichten handeln, welche an andere Anwendungen, vorliegend die Erfassungseinrichtung 21, ausgeliefert werden.

Im Rahmen des beschriebenen Ausführungsbeispiels sei angenommen, dass der Achszähler 10 eine Nachricht N1 in Form einer Anwendungsnachricht veröffentlicht (typischerweise ein Achszählergebnis). Dies bedeutet, dass entsprechend der üblichen Vorgehensweise in Publish/Subscribe-Systemen die Nachricht N1 von der sendeseitigen Anwendung 10 nicht an einen bestimmten Adressaten geschickt wird, sondern mit Adressinformationen versehen in einer Cloud 200 publiziert beziehungsweise veröffentlicht wird. Dabei bestehen die Adressinformationen aus einer Angabe zum Absender der Nachricht N1, d.h. einer den Achszähler 10 identifizierenden Kennung, sowie dem Thema Achszählung, zu dem die Nachricht N1 veröffentlicht wird. Dabei kann ein entsprechendes Thema auch als "Topic" oder auch "Subject" bezeichnet werden. Darüber hinaus können die Adressinformationen optional Informationen zu Eigenschaften der Nachricht N1 umfassen. Entsprechende Eigenschaften können beispielsweise die Wichtigkeit (Priorität) oder Safety-Eigenschaften der Nachricht N1 beschreiben. Vorzugsweise umfasst die von der sendeseitigen Anwendung 10 veröffentlichte Nachricht N1 sowohl das Thema als auch die den Achszähler 10 identifizierende Kennung jeweils in Form einer innerhalb des Zugerfassungssystems 1 eineindeutigen Identität.

Im Rahmen des beschriebenen Ausführungsbeispiels sei angenommen, dass die Nachricht N1 das Thema "Statusdaten", d.h. Statusinformationen des Achszählers betrifft und die Erfassungseinrichtung 21 Nachrichten zu diesem Thema empfangen möchte (etwa um diese beispielsweise stellwerksseitig in Bezug auf den Status des jeweiligen Feldelementes auszuwerten). Hierzu abonniert ("subscribe") die Erfassungseinrichtung 21 alle Nachrichten zu dem Thema "Statusdaten".

Entsprechend der Darstellung der Figur 1 kommunizieren die Achszähler 10 bis 15 sowie die Erfassungseinrichtung 21 nicht direkt miteinander, sondern sind jeweils über eine Schnittstelle mit dem sendeseitigen Nachrichtenbroker 30 beziehungsweise dem empfangsseitigen Nachrichtenbroker 40 verbunden. Zur Vermeidung von Missverständnissen sei darauf hingewiesen, dass es sich bei der schematischen Darstellung der Figur 1 um eine vereinfachte, schematische Darstellung eines simplen Ausführungsbeispiels handelt. Dies bedeutet insbesondere, dass das Zugerfassungssystem 1 in der Regel eine größere Anzahl sowohl sendeseitiger als Erfassungseinrichtungen aufweisen wird. Gleiches gilt in Bezug auf die Anzahl der sendeseitigen und empfangsseitigen Nachrichtenbroker. Dabei können sowohl die Anwendungen als auch die Nachrichtenbroker örtlich verteilt angeordnet sein. Zu jedem Thema kann es beliebig viele Achszählern und beliebig viele Abonnenten, d.h. Erfassungseinrichtungen, geben.

Der Achszähler 10 kann nun zu einem beliebigen Zeitpunkt die Nachricht N1 an den sendeseitigen Nachrichtenbroker 30 schicken. Der sendeseitige Nachrichtenbroker 30 interpretiert die von ihm empfangene Nachricht N1 dabei dahingehend, dass er die von der sendeseitigen Anwendung 10 veröffentlichte Nachricht N1 anhand des in der Nachricht N1 angegebenen Themas auf zumindest zwei redundante, zumindest teilweise physikalisch unabhängigen Netzpfade 50, 51 des Zugerfassungssystems 1 abbildet. Die entsprechenden redundanten Netzpfade 50, 51, die vorzugsweise weitgehend oder vollständig physikalisch unabhängig voneinander sind, sind in Figur 1 in der Cloud 200 angedeutet. Hierdurch soll zum Ausdruck gebracht werden, dass die konkrete Ausprägung der redundanten Netzpfade 50, 51 als solche für die weitere Beschreibung unerheblich ist.

Das Zugerfassungssystem 1 ist nun weiterhin eingerichtet, die Nachricht N1 simultan über die zumindest zwei Netzpfade 50, 51 an den empfangsseitigen Nachrichtenbroker 40 zu übermitteln. Dies bedeutet, dass die Nachricht N1 sowohl über den Netzpfad 50 als auch über den Netzpfad 51 von dem sendeseitigen Nachrichtenbroker 30 an dem empfangsseitigen Nachrichtenbroker 40 übermittelt wird. Die entsprechenden Nachrichten beziehungsweise Nachrichtenkopien sind in Figur 1 zwecks Unterscheidung mit den Bezugszeichen N1' beziehungsweise N1" gekennzeichnet. Dabei versieht der sendeseitige Nachrichtenbroker 30 die Nachricht N1 beziehungsweise die versendeten Nachrichten N1' und N1" mit einer zusätzlichen eindeutigen Sequenznummer, die mit den Nachrichtenkopien N1' und N1" über die Netzpfade 50, 51, die unterschiedliche Netze oder Teilnetze umfassen können, an den empfangsseitigen Nachrichtenbroker 40 übermittelt wird. Dieser leitet von den empfangenen Nachrichten N1' und N1 ' ' mit gleicher Sequenznummer und gleichem Inhalt nur die zuerst empfangene Nachricht an die Erfassungseinrichtung 21 weiter. Im Rahmen des beschriebenen Ausführungsbeispiels soll es sich hierbei um die Nachricht N1" handeln.

Entsprechend den vorstehenden Erläuterungen wird seitens beziehungsweise mittels der Nachrichtenbroker 30 und 40 sowie der unabhängigen Netzpfade 50, 51 eine netzseitige Redundanz erzielt. Dabei ist wesentlich, dass die Nachricht N1 in Form der Nachrichtenkopien N1' und N1", simultan, d.h. gleichzeitig, über die Netzpfade 50 und 51 übermittelt beziehungsweise übertragen wird. Hierdurch wird auch im Falle möglicher Störungen oder Ausfälle eine zuverlässige Übertragung der Nachricht N1 ohne Zeitverzögerung ermöglicht. Damit wird insbesondere auch die Notwendigkeit einer späteren Wiederholung der Übermittlung der Nachricht aufgrund eines Verlusts derselben vermieden. Die Verwendung eines Publish/Subscribe-Systems bietet weiterhin den Vorteil, dass das Zugerfassungssystem 1 nahezu beliebig um weitere Anwendungen und/oder weitere Nachrichtenbroker erweiterbar ist, so dass entsprechende Änderungen flexibel realisierbar sind.

In Figur 2 sind die Achszähler 10 bis 12, die am Gleis 202 verbaut sind, als Detail dargestellt. Zu erkennen ist, dass parallel zwei optische Leiter 201A und 201B verlegt sind. Hierdurch wird für die zu übertragenen Signale Redundanz erzeugt, so dass die Sicherheit bei der Übertragung der Signale verbessert wird.

Außerdem gibt es ein Energieversorgungskabel 204, welches beispielsweise aus einem elektrischen Leiter bestehen kann und eine Energieversorgung der Achszähler 10 bis 12 gewährleistet. Nicht dargestellt, aber auch möglich, ist es, dass das Energieversorgungskabel 204 weggelassen wird, und zumindest einer der optischen Leiter 201A und/oder 201B zur Energieversorgung der Achszähler 10 bis 12 geeignet ist. Dies wird gewährleistet, indem der Energiegehalt der transportierten Signale zur Energieversorgung der Achszähler ausreicht.

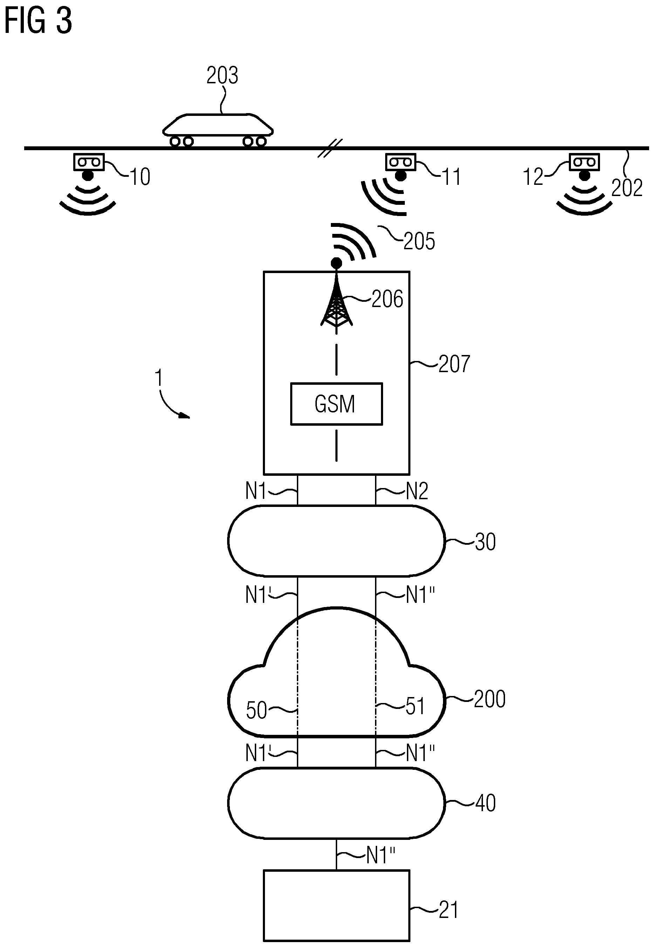

Das Ausführungsbeispiel gemäß Figur 3 entspricht im Wesentlichen demjenigen gemäß Figur 1. Der Unterschied besteht darin, dass die Signale von den Achszählern 10 bis 12 nicht durch einen optischen Leiter 201 (siehe Figur 1), sondern über Funkschnittstellen 205 übertragen werden. Angedeutet ist ein Sendemast 206, der einen Signalaustausch mit den Achszählern 10 bis 12 gewährleisten kann. Hierbei wird ein GSM-Modul GSM verwendet, welches nach dem GSM-Standard arbeitet. Dieses GSM-Modul ist Teil einer Basisstation 207 die, wie zu Figur 1 bereits beschrieben, die Nachricht N1 an den Nachrichtenbroker 30 überträgt.

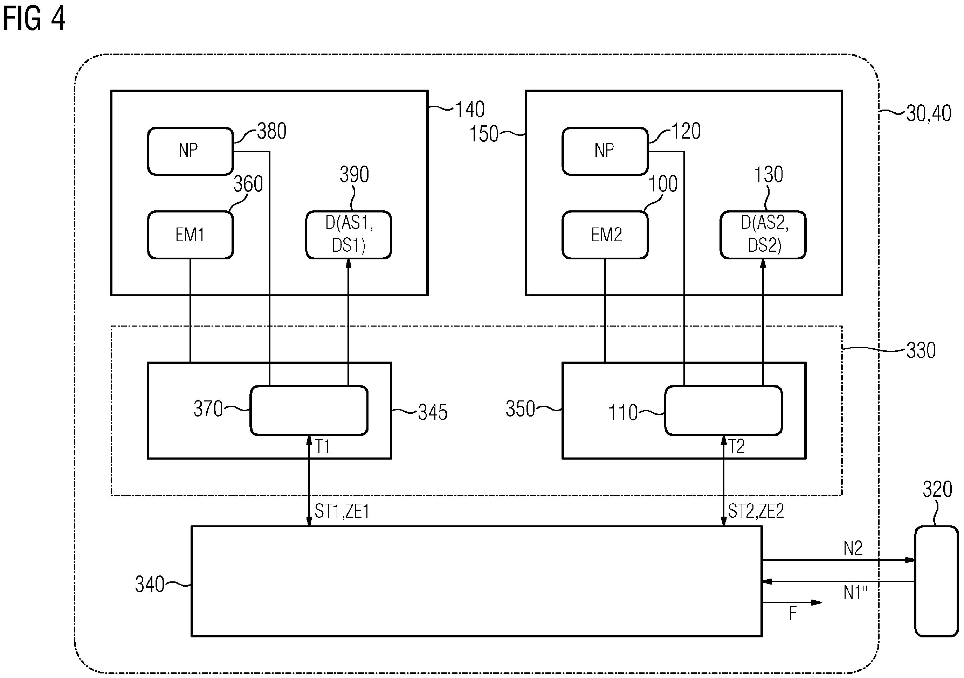

In der Figur 4 erkennt man eine Anordnung die als Nachrichtenbroker 30, 40 zur Steuerung einer technischen Einrichtung 320 in Form von Achszählern 10 bis 15 in einem Sensorverbund mit Übertragungsmöglichkeit gemäß Figur 1 oder 3 für die Übertragung der Nachrichten N1" oder N2 zum Einsatz kommen kann. Die Anordnung umfasst ein Mikroprozessorsystem 330, das über einen Vergleichsbaustein 340 mit der technischen Einrichtung 320 in Verbindung steht. Das Mikroprozessorsystem 330 weist zwei oder mehr Prozessoren auf, von denen in der Figur 4 aus Gründen der Übersicht lediglich zwei dargestellt sind, nämlich ein erster Prozessor 345 sowie ein zweiter Prozessor 350. Die beiden Prozessoren 345 und 350 können beispielsweise baugleich oder identisch sein.

Der erste Prozessor 345 führt ein Emulationsprogramm EM1 aus, das in einem Speicherbereich 360 abgespeichert ist. Durch die Durchführung des Emulationsprogramms EM1 bildet der erste Prozessor 345 einen Mikroprozessor 370 einer ersten Art, beispielsweise einen Prozessor des Typs Intel 80386.

Der durch den ersten Prozessor 345 nachgebildete Mikroprozessor 370 führt ein Nutzprogramm NP aus, bei dem es sich vorzugsweise um ein Steuerprogramm handelt, mit dem sich Steuersignale ST1 zur Steuerung der technischen Einrichtung 320 erzeugen lassen. Das Nutzprogramm NP ist bei dem Ausführungsbeispiel gemäß Figur 4 in einem Speicherbereich 380 abgespeichert.

Im Rahmen der Bearbeitung des Nutzprogramms NP durch den vom ersten Prozessor 345 nachgebildeten Mikroprozessor 370 werden Daten in einem Speicherbereich 390 abgespeichert sowie Daten aus diesem Speicherbereich 390 ausgelesen. Beim Abspeichern und Auslesen dieser Daten wird der Mikroprozessor 370 eine erste Adressstruktur AS1 sowie eine erste Datenstruktur DS1 verwenden. Die unter Berücksichtigung dieser ersten Adressstruktur AS1 und dieser ersten Datenstruktur DS1 abgespeicherten und ausgelesenen Daten sind in der Figur 4 mit dem Bezugszeichen D (AS1, DS1) bezeichnet.

Als Adressstruktur kann beispielsweise eine lineare oder transformierte, insbesondere eine verwürfelte Adressstruktur verwendet werden.

Als Datenstruktur für die Datenablage der vom Emulator verwendeten Datenwörter werden die Datenwörter transformiert, zum Beispiel durch Bitvertauschung oder arithmetische Operationen, wie beispielsweise durch Multiplizieren mit einer Primzahl.

Der zweite Prozessor 350 führt ein zweites Emulationsprogramm EM2 aus, das in einem Speicherbereich 100 abgespeichert ist. Das Emulationsprogramm EM2 unterscheidet sich von dem Emulationsprogramm EM1, das von dem ersten Prozessor 345 ausgeführt wird. Konkret wird der zweite Prozessor 350 im Rahmen der Ausführung des zweiten Emulationsprogramms EM2 einen zweiten Mikroprozessor 110 nachbilden, der sich von dem ersten Mikroprozessor 370, der von dem ersten Prozessor 345 nachgebildet wird, unterscheidet, jedoch den identischen Befehlssatz interpretiert. Der durch den zweiten Prozessor 350 durch die Emulation nachgebildete zweite Mikroprozessor 110 führt ein Nutzprogramm NP aus, das in einem Speicherbereich 120 abgespeichert ist. Das Nutzprogramm NP im Speicherbereich 120 entspricht dem Nutzprogramm NP, das in dem Speicherbereich 380 abgespeichert ist. Die beiden Nutzprogramme NP in den beiden Speicherbereichen 380 und 120 sind also gleich bzw. identisch, es handelt sich also um ein und dasselbe Nutzprogramm.

Im Rahmen der Bearbeitung des Nutzprogramms NP des Speicherbereichs 120 wird der zweite Mikroprozessor 110 Daten erzeugen, die er in einem Speicherbereich 130 abspeichert. Im Rahmen dieser Abspeicherung der Daten wird der zweite Mikroprozessor 110 eine zweite Adressstruktur AS2 sowie eine zweite Datenstruktur DS2 heranziehen, die sich von der ersten Adressstruktur AS1 und der ersten Datenstruktur DS1, die von dem ersten Mikroprozessor 370 verwendet werden, unterscheiden. Durch diese Maßnahme wird erreicht, dass die Datensätze, die in den beiden Speicherbereichen 390 und 130 abgespeichert sind, stets unterschiedlich sind, auch wenn die beiden nachgebildeten Mikroprozessoren 370 und 110 aufgrund der Abarbeitung des gleichen Nutzprogramms NP inhaltsgleiche Daten erzeugen. Aufgrund der Unterschiedlichkeit der Adressstruktur und aufgrund der Unterschiedlichkeit der Datenstruktur ist sichergestellt, dass sich Fehler beim Abspeichern und Lesen in den beiden Speicherbereichen 390 und 130 in unterschiedlicher Weise zeigen werden, so dass diese Fehler zu unterschiedlichen Ausgangssignalen und unterschiedlichen Steuersignalen ST1 und ST2 führen müssten. Entsprechendes gilt für Zwischenergebnisse ZE1 und ZE2, die von den beiden nachgebildeten Mikroprozessoren 370 und 110 zum Zwecke der Kontrolle und des Vergleichs zum Vergleichsbaustein 340 übersandt werden.

Die beiden Prozessoren 345 und 350, mit denen die beiden Mikroprozessoren 370 und 110 mittels Emulation nachgebildet werden, können baugleich oder unterschiedlich sein, wichtig ist nur, dass die beiden Prozessoren 345 und 350 unterschiedliche Mikroprozessoren bzw. Mikroprozessoren in unterschiedlicher Art nachbilden.

Die Zuordnung der Speicherbereiche 360, 380, 390, 100, 120 und 130 zu physikalischen Speicherbausteinen ist prinzipiell beliebig. Bei dem Ausführungsbeispiel gemäß Figur 4 wird es als vorteilhaft angesehen, wenn die Speicherbereiche 360, 380 und 390 in einem individuellen Speichermodul 140 und die Speicherbereiche 100, 120 und 130 in einem individuellen Speichermodul 150 vorgesehen werden, das von dem Speichermodul 140 getrennt ist.

Wie beschrieben, werden die beiden Prozessoren 345 und 350 unterschiedliche Mikroprozessoren 370 und 110 nachbilden, die das gleiche Nutzprogramm NP ausführen. Der Vergleichsbaustein 340 hat nun die Aufgabe, die von den beiden nachgebildeten Mikroprozessoren 370 und 110 ermittelten Zwischenergebnisse ZE1 und ZE2 miteinander zu vergleichen und im Falle einer etwaigen Abweichung ein Fehlersignal F zu erzeugen. In entsprechender Weise wird der Vergleichsbaustein 340 die Steuersignale ST1 und ST2 miteinander vergleichen, die von den beiden nachgebildeten Mikroprozessoren 370 und 110 gebildet werden. In dieser Weise kann der Vergleichsbaustein 340 regelmäßig bzw. zyklisch überprüfen, ob die beiden nachgebildeten Mikroprozessoren 370 und 110 bei Ausführung des gleichen Nutzprogramms NP dieselben Ergebnisse liefern.

Um einen zyklischen Vergleich der Ergebnisse durch den Vergleichsbaustein 340 zu ermöglichen bzw. zu vereinfachen, wird es als vorteilhaft angesehen, wenn der Vergleichsbaustein 340 eine Art "Grobuhr" für die beiden nachgebildeten Mikroprozessoren 370 und 110 bildet. Eine solche "Grobuhr" kann beispielsweise durch das Übermitteln von Triggersignalen T1 bzw. T2 oder entsprechender Taktsignale erfolgen, mit denen die Abarbeitung bestimmter Abschnitte des Nutzprogramms NP bei den beiden nachgebildeten Mikroprozessoren 370 und 110 ausgelöst bzw. Zwischenergebnisse ZE1 bzw. ZE2 oder Steuersignale ST1 bzw. ST2 von den beiden nachgebildeten Mikroprozessoren 370 und 110 abgefragt werden.

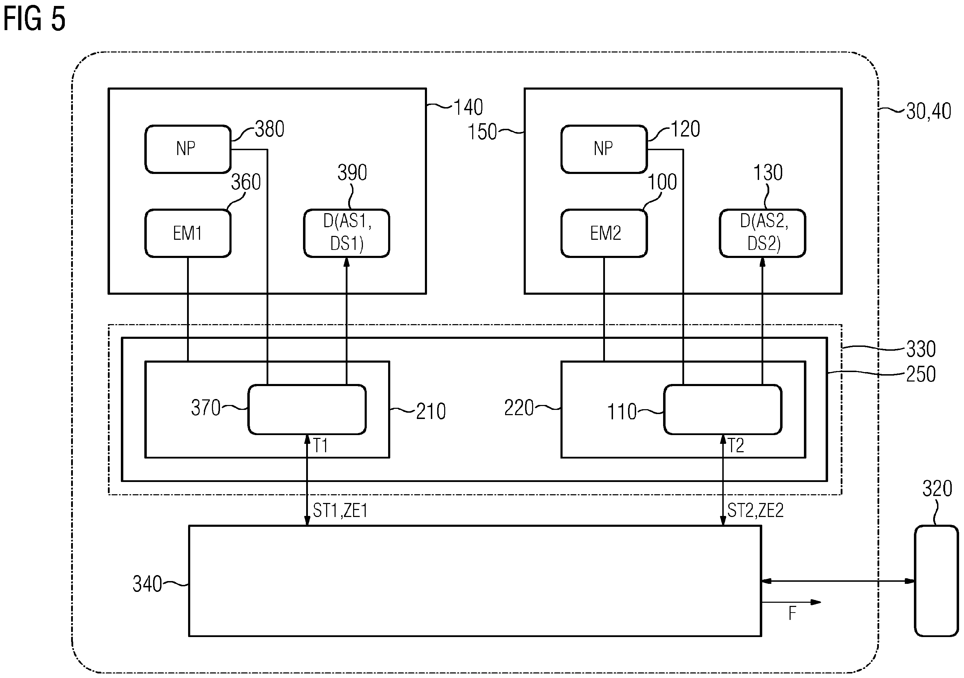

Die Figur 5 zeigt ein zweites Ausführungsbeispiel für eine Anordnung 30, 40, die zum Steuern einer technischen Einrichtung 320 geeignet ist.

Bei dem Ausführungsbeispiel gemäß Figur 5 wird das Mikroprozessorsystem 330 durch einen Multikernprozessor 250 gebildet, der zwei oder mehr Prozessorkerne aufweist. Bei dem Ausführungsbeispiel gemäß Figur 5 sind lediglich zwei Prozessorkerne gezeigt, nämlich ein erster Prozessorkern 210 sowie ein zweiter Prozessorkern 220.

Der erste Prozessorkern 210 führt ein erstes Emulationsprogramm EM1 aus, das in einem Speicherbereich 360 abgespeichert ist. Durch den ersten Prozessorkern 210 wird somit ein erster Mikroprozessor 370 nachgebildet. Insoweit entspricht die Arbeitsweise des ersten Prozessorkerns 210 der Arbeitsweise des ersten Prozessors 345 gemäß Figur 4, so dass auf die obigen Ausführungen verwiesen sei. Der von dem ersten Prozessorkern 210 nachgebildete Mikroprozessor 370 wird in der oben beschriebenen Weise unter Heranziehung der ersten Adressstruktur AS1 und der ersten Datenstruktur DS1 Daten in einem Speicherbereich 390 abspeichern oder auslesen und dabei das Nutzprogramm NP ausführen.

Der zweite Prozessorkern 220 entspricht von seiner Arbeitsweise her dem zweiten Prozessor 350 gemäß Figur 4. Der zweite Prozessorkern 220 wird ein zweites Emulationsprogramm EM2 ausführen, das in einem Speicherbereich 100 abgespeichert ist, und einen Mikroprozessor 110 nachbilden. Die Arbeitsweise des nachgebildeten Mikroprozessors 110 entspricht der Arbeitsweise des Mikroprozessors 110, wie er bereits im Zusammenhang mit der Figur 4 erläutert worden ist.

Auch die Arbeitsweise des Vergleichsbausteins 340 kann mit der Arbeitsweise des Vergleichsbausteins 340 gemäß Figur 4 identisch sein, so dass auf die obigen Ausführungen verwiesen sei.

### Bezugszeichenliste:

- 1: Zugerfassungssystem
- 110, 330, 370: Mikroprozessor
- 120, 130, 360, 380, 390: Speicherbereich
- 140: Speichermodul
- 150: individuelles Speichermodul
- 10 bis 15: Achszähler
- 21: Erfassungseinrichtung
- 200: Cloud
- 201, 201A, 201 B: optischer Wellenleiter
- 202: Gleis
- 203: Zug
- 204: Energieversorgungskabel
- 205: Funkschnittstelle
- 206: Sendemast
- 207: Basisstation
- 210: erster Prozessorkern
- 220: zweiter Prozessorkern
- 250: Multikernprozessor
- 320: technische Einrichtung
- 330, 370: Mikroprozessor(-system)
- 340: Vergleichsbaustein
- 345: erster Prozessor
- 350: zweiter Prozessor
- 360, 380, 390: Speicherbereich
- 30, 40: Nachrichtenbroker
- 50, 51: Netzpfad
- AS1, AS2: Adressstruktur
- D: Daten
- DS1, DS2: Datenstruktur
- EM1, EM2: Emulationsprogramm
- F: Fehlersignal
- N1, N2: Nachricht
- NP: Nutzprogramm
- ST1, ST2: Steuersignal
- T1, T2: Triggersignal
- ZE1, ZE2: Zwischenergebnis

## Patentansprüche

1. Zugerfassungssystem (1) mit mindestens einem Achszähler (10 ... 15), der mit einer Erfassungseinrichtung (21) signaltechnisch verbunden ist,
wobei
das Zugerfassungssystem (1) zur Datenübertragung ein Publish/Subscribe-System aufweist mit
• zumindest einem zum Veröffentlichen von Nachrichten eingerichteten Achszähler (10 ... 15),
• zumindest einem sendeseitigen Nachrichtenbroker (30),
• mehreren empfangsseitigen Nachrichtenbrokern (40) sowie
• zumindest der einen zum Empfangen von Nachrichten eingerichteten empfangsseitigen Erfassungseinrichtung (21),
und wobei
• jeder Achszähler (10 ... 15) kommunikationstechnisch an den sendeseitigen Nachrichtenbroker (30) oder einen der sendeseitigen Nachrichtenbroker angebunden ist,
• der zumindest eine sendeseitige Nachrichtenbroker (30) eingerichtet ist, eine von dem Achszähler (10) oder einem der Achszähler (10 ... 15) veröffentlichte Nachricht (N1) anhand eines in der Nachricht (N1) angegebenen Themas, das insbesondere auf den Aspekt der Achszählung hinweist, auf zumindest zwei redundante, zumindest teilweise physikalisch unabhängige Netzpfade (50, 51) des Zugerfassungssystems (1) abzubilden,
• das Zugerfassungssystem (1) eingerichtet ist, die Nachricht (N1) simultan über die zumindest zwei Netzpfade (50, 51) an mehrere der empfangsseitigen Nachrichtenbroker, die jeweils zumindest zwei Multicast-Gruppen zugeordnet sind, wobei jede der Multicast-Gruppen einen der redundanten, zumindest teilweise physikalisch unabhängigen Netzpfade (50, 51) des Zugerfassungssystems (1) verwendet, zu übermitteln,
• jede empfangsseitige Erfassungseinrichtung (21) kommunikationstechnisch an
• einen der empfangsseitigen Nachrichtenbroker angebunden ist und
• jeder empfangsseitige Nachrichtenbroker (40) eingerichtet ist, die Nachricht (N1) an die zumindest eine empfangsseitige Erfassungseinrichtung (21) zu übermitteln.

2. Zugerfassungssystem nach Anspruch 1,
**dadurch gekennzeichnet,**
**dass** die zumindest eine Erfassungseinrichtung (21)
• derart programmiert ist, dass eine redundante Datenverarbeitung erfolgt, wobei das gleiche Nutzprogramm (NP) zumindest zweimal ausgeführt wird, und
• mit einem Vergleichsbaustein (340), der die Ergebnisse der zumindest zwei Programmausführungen miteinander vergleicht, ausgestattet ist.

3. Zugerfassungssystem nach Anspruch 2,
**dadurch gekennzeichnet, dass**
• die zumindest eine Erfassungseinrichtung (21) derart programmiert ist, dass auf dieser zumindest zwei Emulatoren (EM1, EM2) unterschiedliche Mikroprozessoren (370, 110) softwaremäßig nachbilden,
• jeder der zumindest zwei nachgebildeten Mikroprozessoren (370, 110) das gleiche Nutzprogramm (NP) mikroprozessorindividuell ausführt und
• die Ergebnisse der zumindest zwei nachgebildeten Mikroprozessoren (370, 110) mit dem Vergleichsbaustein (340) verglichen werden.

4. Zugerfassungssystem nach einem der Ansprüche 1-2,
**dadurch gekennzeichnet,**
**dass** zumindest ein Teil der Erfassungseinrichtungen (21) in einem eigenen Prozessor oder Prozessorkern abläuft.

5. Zugerfassungssystem nach einem der voranstehenden Ansprüche,
**dadurch gekennzeichnet,**
**dass** mehrere Achszähler (10 ... 15) über Funkverbindungen, insbesondere über nach dem GSM-Standard arbeitende Funkverbindungen, miteinander vernetzt sind.

6. Zugerfassungssystem nach Anspruch 4,
**dadurch gekennzeichnet,**
**dass** mehrere Achszähler über einen optischen Wellenleiter miteinander vernetzt sind.

7. Zugerfassungssystem nach Anspruch 6,
**dadurch gekennzeichnet,**
**dass** die Achszähler (10 ... 15) ein Sensornetzwerk mit einer Ringarchitektur bilden.

8. Zugerfassungssystem nach Anspruch 6 oder 7,
**dadurch gekennzeichnet,**
**dass** die Energieversorgung mindestens eines Achszählers über den optischen Wellenleiter erfolgt.

9. Zugerfassungssystem nach einem der voranstehenden Ansprüche,
**dadurch gekennzeichnet,**
**dass** die Energieversorgung mindestens eines Achszählers (10 ... 15) autark, insbesondere über Solarzellen, erfolgt.

10. Verfahren zum Übermitteln von Nachrichten (N1) in einem Zugerfassungssystem (1),
wobei
in dem Zugerfassungssystem (1) ein Publish/Subscribe-System eingerichtet wird
• mit zumindest einem zum Veröffentlichen von Nachrichten eingerichteten Achszähler (10 ... 15),
• mit zumindest einem sendeseitigen Nachrichtenbroker (30), wobei jeder Achszähler (10 ... 15) kommunikationstechnisch an den sendeseitigen Nachrichtenbroker (30) oder einen der sendeseitigen Nachrichtenbroker angebunden ist,
• mit zumindest einer zum Empfangen von Nachrichten eingerichteten empfangsseitigen Erfassungseinrichtung (21) sowie
• mit mehreren empfangsseitigen Nachrichtenbrokern (40), wobei jede empfangsseitige Erfassungseinrichtung (21) kommunikationstechnisch an einen der empfangsseitigen Nachrichtenbroker angebunden ist,
und wobei
• eine von dem Achszähler (z.B. 10) oder einem der Achszähler (10 ... 15) veröffentlichte Nachricht (N1) von dem betreffenden sendeseitigen Nachrichtenbroker (30) anhand eines in der Nachricht (N1) angegebenen Themas, das insbesondere auf den Aspekt der Achszählung hinweist, auf zumindest zwei redundante, zumindest teilweise physikalisch unabhängige Netzpfade (50, 51) des Zugerfassungssystems (1) abgebildet wird,
• die Nachricht (N1) simultan über die zumindest zwei Netzpfade (50, 51) an mehrere der empfangsseitigen Nachrichtenbroker, die jeweils zumindest zwei Multicast-Gruppen zugeordnet sind, wobei jede der Multicast-Gruppen einen der redundanten, zumindest teilweise physikalisch unabhängigen Netzpfade (50, 51) des Zugerfassungssystems (1) verwendet, übermittelt wird, und
• die Nachricht (N1) von zumindest einem der empfangsseitigen Nachrichtenbroker (40) an die zumindest eine Erfassungseinrichtung (21) übermittelt wird.

## Claims

1. Train detection system (1) having at least one axle counter (10 ... 15) which is connected for signalling purposes to a detection device (21),
wherein
for data transmission purposes the train detection system (1) has a publish/subscribe system having
• at least one axle counter (10 ... 15) configured for publishing messages,
• at least one transmit-side message broker (30),
• a plurality of receive-side message brokers (40), and
• at least the one receive-side detection device (21) configured for receiving messages,
and wherein
• each axle counter (10 ... 15) is connected for communication purposes to the transmit-side message broker (30) or one of the transmit-side message brokers,
• the at least one transmit-side message broker (30) is configured to map a message (N1) published by the axle counter (10) or one of the axle counters (10 ... 15) onto at least two redundant, at least partially physically independent network paths (50, 51) of the train detection system (1) on the basis of a topic specified in the message (N1) and pointing in particular to the aspect of axle counting,
• the train detection system (1) is configured to transmit the message (N1) simultaneously over the at least two network paths (50, 51) to a plurality of the receive-side message brokers, each of which is assigned to at least two multicast groups, wherein each of the multicast groups uses one of the redundant, at least partially physically independent network paths (50, 51) of the train detection system (1),
• each receive-side detection device (21) is connected for communication purposes to
• one of the receive-side message brokers, and
• each receive-side message broker (40) is configured to transmit the message (N1) to the at least one receive-side detection device (21).

2. Train detection system according to claim 1,
**characterised in that**
the at least one detection device (21)
• is programmed in such a way that redundant data processing is performed, wherein the same utility routine (NP) is executed at least twice, and
• is equipped with a comparison module (340) which compares the results of the at least two program runs with one another.

3. Train detection system according to claim 2,
**characterised in that**
• the at least one detection device (21) is programmed in such a way that on the latter at least two emulators (EM1, EM2) emulate different microprocessors (370, 110) in software,
• each of the at least two emulated microprocessors (370, 110) executes the same utility routine (NP) in a microprocessor-specific manner, and
• the results of the at least two emulated microprocessors (370, 110) are compared by means of the comparison module (340) .

4. Train detection system according to one of claims 1-2,
**characterised in that**
at least some of the detection devices (21) run in a separate dedicated processor or processor core.

5. Train detection system according to one of the preceding claims,
**characterised in that**
a plurality of axle counters (10 ... 15) are networked with one another via radio links, in particular via radio links operating according to the GSM standard.

6. Train detection system according to claim 4,
**characterised in that**
a plurality of axle counters are networked with one another via an optical waveguide.

7. Train detection system according to claim 6,
**characterised in that**
the axle counters (10 ... 15) form a sensor network with a ring architecture.

8. Train detection system according to claim 6 or 7,
**characterised in that**
the energy supply for at least one axle counter is provided via the optical waveguide.

9. Train detection system according to one of the preceding claims,
**characterised in that**
the energy supply for at least one axle counter (10 ... 15) is self-sufficient, in particular being provided via photovoltaic cells.

10. Method of transmitting messages (N1) in a train detection system (1),
wherein
in the train detection system (1) there is configured a publish/subscribe system
• having at least one axle counter (10 ... 15) configured for publishing messages,
• having at least one transmit-side message broker (30), wherein each axle counter (10 ... 15) is connected for communication purposes to the transmit-side message broker (30) or one of the transmit-side message brokers,
• having at least one receive-side detection device (21) configured for receiving messages, and
• having a plurality of receive-side message brokers (40), wherein each receive-side detection device (21) is connected for communication purposes to one of the receive-side message brokers,
and wherein
• a message (N1) published by the axle counter (e.g. 10) or one of the axle counters (10 ... 15) is mapped by the respective transmit-side message broker (30) onto at least two redundant, at least partially physically independent network paths (50, 51) of the train detection system (1) on the basis of a topic specified in the message (N1) and pointing in particular to the aspect of axle counting,
• the message (N1) is transmitted simultaneously over the at least two network paths (50, 51) to a plurality of the receive-side message brokers, each of which is assigned to at least two multicast groups, wherein each of the multicast groups uses one of the redundant, at least partially physically independent network paths (50, 51) of the train detection system (1), and
• the message (N1) is transmitted by the at least one receive-side message broker (40) to the at least one detection device (21).

## Revendications

1. Système (1) de détection de trains comprenant au moins un compteur (10 ... 15) d'essieux, qui communique en technique du signal avec un dispositif (21) de détection,
dans lequel
le système (1) de détection de trains a, pour la transmission de données, un système publish/subscribe comprenant
• au moins un compteur (10 ... 15) d'essieux agencé pour la publication de messages,
• au moins un broker (30) de messages du côté de l'émission,
• plusieurs brokers (40) de messages du côté de la réception ainsi que
• au moins un dispositif (21) de détection du côté de la réception, agencé pour la réception de messages,
et dans lequel
• chaque compteur (10 ... 15) d'essieux est relié en technique de communication au broker (30) de messages du côté de l'émission ou à l'un des brokers de messages du côté de l'émission,
• le au moins un broker (30) de messages du côté de l'émission est agencé pour représenter sur au moins deux chemins (50, 51) de réseau redondants, indépendants physiquement au moins en partie, du système (1) de détection de trains, un message (N1) publié par le compteur (10) d'essieux ou par l'un des compteurs (10 ... 15) d'essieux, à l'aide d'un thème indiqué dans le message (N1), qui, en particulier renvoie à l'aspect du comptage d'essieux,
• le système (1) de détection de trains est agencé pour transmettre le message (N1) simultanément par les au moins deux chemins (50, 51) de réseau à plusieurs des brokers de messages du côté de la réception, qui sont associés à respectivement au moins deux groupes multicast, dans lequel chacun des groupes multicast utilise l'un des chemins (50, 51) de réseau redondants, indépendants au moins partiellement physiquement, du système (1) de détection de trains,
• chaque dispositif (21) de détection du côté de la réception est relié en technique de communication à
• l'un des brokers de messages du côté de la réception et
• chaque broker (40) de messages du côté de la réception est agencé pour transmettre le message (N1) au au moins un dispositif (21) de détection du côté de la réception.

2. Système de détection de trains suivant la revendication 1,
**caractérisé en ce que**
le au moins un dispositif (21) de détection
• est programmé, de manière à effectuer un traitement de données redondant, dans lequel le même programme (NP) utile est exécuté au moins deux fois, et
• est équipé d'un module (340) de comparaison, qui compare entre eux les résultats des au moins deux exécutions du programme.

3. Système de détection de trains suivant la revendication 2,
**caractérisé en ce que**
• le au moins un dispositif (21) de détection est programmé, de manière à ce que, en logiciel sur celui-ci, au moins deux émulateurs (EM1, EM2) représentent des microprocesseurs (370, 110) différents,
• chacun des au moins deux microprocesseurs (370, 110) représentés exécute, individuellement par microprocesseur, le même programme (NP) utile et
• les résultats des au moins deux microprocesseurs (370, 110) représentés sont comparés avec le module (340) de comparaison.

4. Système de détection de trains suivant l'une des revendications 1 à 2,
**caractérisé en ce qu'**
au moins une partie des dispositifs (21) de détection se déroule dans leur propre processeur ou dans un noyau de processeur.

5. Système de détection de trains suivant l'une des revendications précédentes,
**caractérisé en ce que**
plusieurs compteurs (10 ... 15) d'essieux sont mis en réseau entre eux par des liaisons radios, en particulier par des liaisons radios opérant suivant la norme GSM.

6. Système de détection de trains suivant la revendication 4,
**caractérisé en ce que**
plusieurs compteurs d'essieux sont mis en réseau entre eux par un guide d'onde optique.

7. Système de détection de trains suivant la revendication 6,
**caractérisé en ce que**
les compteurs (10 ... 15) d'essieux forment un réseau de capteurs ayant une architecture en anneau.

8. Système de détection de trains suivant la revendication 6 ou 7,
**caractérisé en ce que**
l'alimentation en énergie d'au moins un compteur d'essieux s'effectue par le guide d'onde optique.

9. Système de détection de trains suivant l'une des revendications précédentes,
**caractérisé en ce que**
l'alimentation en énergie d'au moins un compteur (10 ... 15) d'essieux s'effectue, de manière autonome, en particulier par des cellules solaires.

10. Procédé de transmission de messages (N1) dans un système (1) de détection de trains,
dans lequel
on agence un système publish/subscribe dans le système (1) de détection de trains
• comprennent au moins un compteur (10 ... 15) d'essieux agencé pour la publication de messages,
• comprenant au moins un broker (30) de messages du côté de l'émission, dans lequel chaque compteur (10 ... 15) d'essieux est relié en technique de communication au broker (30) de messages du côté de l'émission ou à l'un des brokers de messages du côté de l'émission,
• comprenant au moins un dispositif (21) de détection du côté de la réception agencé pour la réception de messages ainsi que
• comprenant plusieurs brokers (40) de messages du côté de la réception, dans lequel chaque dispositif (21) de détection du côté de la réception est relié en technique de communication à l'un des brokers de messages du côté de la réception,
et dans lequel
• on représente sur au moins deux chemins (50, 51) de réseau redondants, indépendants physiquement au moins en partie, du système (1) de détection de trains, par le broker (30) de messages du côté de l'émission concerné, un message (N1) publié par le compteur (z.B.10) d'essieux ou l'un des compteurs (10 ... 15) d'essieux, à l'aide d'un thème indiqué dans le message (N1), qui, en particulier renvoie à l'aspect du comptage d'essieux,
• on transmet le message (N1) simultanément par les au moins deux chemins (50, 51) de réseau à plusieurs des brokers de messages du côté de la réception, qui sont associés respectivement à au moins deux groupes multicast, dans lequel chacun des groupes multicast utilise l'un des chemins (50, 51) de réseau redondants, indépendants physiquement au moins en partie, du système (1) de détection de trains, et
• on transmet le message (N1) du au moins l'un des brokers (40) de messages du côté de la réception au au moins un dispositif (21) de détection.
